# EUROPEAN PATENT APPLICATION

(11) **EP 2 184 544 A1**
(43) Date of publication of application: **12.05.2010**
(21) Application number: 08425720.3
(22) Date of filing: 10.11.2008
(51) Int. Cl.: F24B 3/00, F24C 1/16

(54) **Assembly of burning pellets and pellet burning apparatus**

(71) Applicant: M.A. Trading S.r.L., 35127 Padova (IT)
(72) Inventor: Castaldo, Carla, 36032 Gallio (VI) (IT)
(74) Representative: Ferraiolo, Ruggero

(57) **Abstract**

The pellet is produced from virgin wood dried by a process that maintains a residual inner moisture lower than 10% and where the final pressure exerted on each single pellet is between 20 and 30 bar; the burning apparatus (1) is a metal container open on the top and having the side and bottom walls in grating structure where the surface of the voids (6, 6A,31) in each wall ranges from 25 to 50% of the overall surface of the wall and feet (5,11, 33) keep it at a distance from the face varying from 1,0 to 1,5 cm (Fig. 1).

## Description

### Field of the invention

The field of the invention is that of heating rooms by conventional fireplaces, although the field extends to combustion in an open space.

The main scope of the invention is to provide alternative means to the use of a conventional fireplace where firewood is usually burnt.

Another scope of the invention is to provide means for causing a controlled combustion in open spaces.

Still another scope of the invention is to provide light and easy means for causing a controlled combustion in even remote open spaces.

### The Prior Art

In this context the word - pellet - means the fuel produced by grinding various kinds and derivatives of virgin wood which is generally put on the market in sacks of 15 Kg. Also by the same word - pellet - a quantity or a measure of single pellets is intended which can be or is burnt as a pellet heap.

It is known that pellets are obtained from virgin wood that has been first worked in the form of chips and then has dried and refined through an industrial process that finally produces small cylinders of 6-8 mm diameter and 30 mm of maximum length through a pressing of a value depending on the kind of wood. In order to give each single cylinder the desired closeness the inner residual moisture content shall not exceed 10%.

Also it is known that pellets produced as said above do not bum easily, but always need in a pellet boiler or in a pellet burning stove, in addition to suitable fire starter materials, a forced air blow well adjusted for supporting both the effect of the starter material and a continual combustion.

In a conventional fireplace pellets can not be used instead of conventional wooden logs, as it has been explained above.

### Drawbacks of the Prior Art

The conventional pellets need closed burning apparatus made on purpose. They are much dehydrated by the industrial process which gets the pellets from virgin wood and reduces their intrinsic moisture content to values never higher than 10% by weight. Moreover, even if the pellets are placed for burning in an open room and then started, they tend to crackle and likely cause launches of burning particles with safety problems around there. On the other hand, they would not bum without an adequate air flow.

### Summary of the Invention

The invention is an assembly - pellet and pellet burning apparatus - . The invention refers to pellet made for burning in a suitable burning apparatus which can be set down on any plane, in particular on the plane of a conventional fireplace or on an open area and this entails advantages that will be explained forward.

The pellets coming up to the desired scope, produced from dried virgin wood in an industrial process, have an inner moisture content lower that 10% by weight and a closeness given by a process pressure ranging from 20 to 30 bar, which supplies a product that can be started easily and bums without need of forced air.

The burning apparatus is a metal container which is open on top and has the side and bottom walls in a grating structure where the surface of the voids with respect to the overall surface, by no means being chosen at random, shall be such as to aid the air entry into the apparatus and the best combustion of pellet. The ratio between the surface of the voids in a wall and the overall surface of that wall is preferably the same in all walls in the apparatus. The void surface spans between 25 and 50% of the overall surface of each wall in order to cause yet a good combustion, while the void surface shall be between 35 and 40% in order to cause an optimum air entry into the apparatus, a relevant optimum air circulation within the pellet heap and maintain a bright and complete combustion.

Additionally, the apparatus is provided with elements adapted to keep it at a distance from a face ranging from 1,0 to 1,5 cam, which is essential for allowing air to penetrate in optimum quantity through the meshes in the bottom wall once the apparatus has a plant surface varying between about 1,800 and about 2,000 cm² adapted to be set on a plane of a conventional fireplace of medium sizes.

### Advantages of the Invention

The invention offers a number of advantages:
- assuring the best pellet combustion without the drawback of crackling and possible launching of burning particles;
- the burning apparatus can be dismantled and reassembled, is light and can be moved easily;
- the assembly needs no recourse to any technology, technique and auxiliary materials;
- the combustion at the open air produces a direct heat with smokeless flame and a nearly total absence of ashes;
- the burning apparatus does not make dirty the fireplace face, contrary to what usually happens when using wood;
- the burning apparatus can be produced and put on the market in several solutions. It may have different shapes, square, rectangular, round, etc. and may be made with different materials and arrangements, like commercial or not commercial mesh metal lathing , galvanized steel, stainless steel, steel buckle plates, made of steel crossed bands or wires, etc. The apparatus walls are single elements which can be easily and rapidly assembled so that the overall dimensions of the dismantled apparatus as well as the reassembling and assembling times are reduced to a minimum.

Said advantages are appreciated by those peoples who want to use a fireplace for heating and like to enjoy the sight of a pleasant flame and also by those peoples that want to start a fire out of the domestic environment, in areas where fire is allowed, like camping grounds, special public parks, mountain camps, etc. Absence of crackles makes it possible all the above. It should be added that the combustion of this pellet in this apparatus substantially leaves a negligible quantity of ashes, less than 1% by weight.

### Detailed Description of the Invention

The invention will be described in detail showing examples of embidiments and with reference to attached drawings wherein :
- Fig. 1 is a perspective view of a first apparatus,
- Fig. 2 comprises views of the walls of a second apparatus and
- Fig. 3 is a perspective view of a third apparatus.

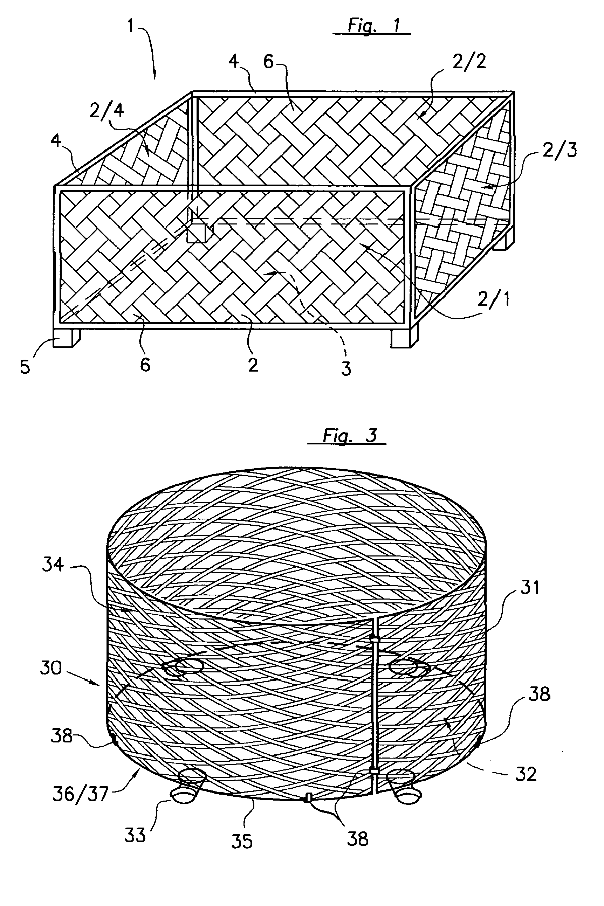

Figure 1 shows a first burning apparatus 1 of rectangular plant, sizes 40 x 50 cm, wherein the four side walls 2/1, 2/2, 2/3, 2/4 and the bottom wall 3 are gratings built up with crossed hot-galvanized steel bands 2 that have their ends welded on the peripheral frames 4. The total surface of voids 6 in each of the five walls is 45% of the total surface of that wall. In the bottom wall the grating is not shown to save confusion in the drawing. The apparatus feet 5 keep the bottom wall 3 at a distance of 1,5 cm from the face, such a distance proving to be the one that causes the best air penetration below the pellet heap when set on a surface of nearly 2.000 cm².

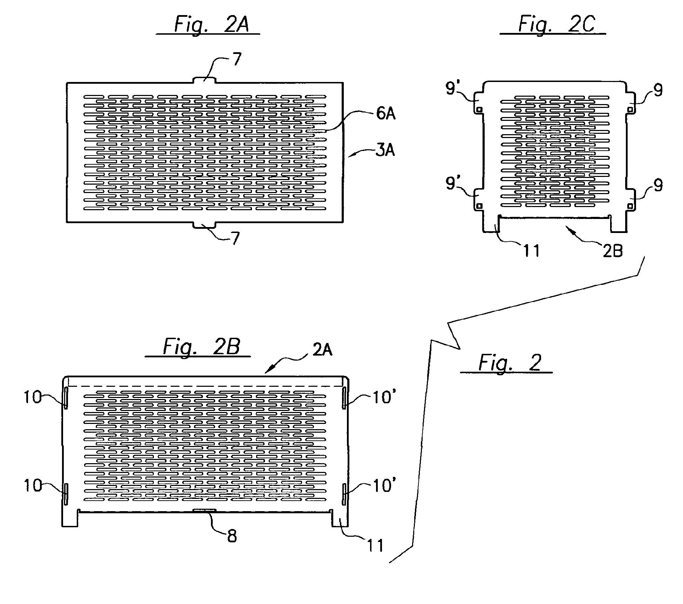

Figure 2 shows in the parts 2A, 3A and 2B the walls of a second burning apparatus of rectangular plant made of punched steel plate wherein the total void surface 6A in the walls is 35% of the total wall surface. There are shown : a) the bottom wall 3A with two opposite wings 7 adapted to engage in the corresponding slots 8 provided at the bottom of the two big side walls 2A (one only is shown); b) one of the two small side walls 2B with the opposite wings 9, 9' adapted to engage in the corresponding slots 10, 10' provided in the big side walls 2A. The side walls 2A, 2B are provided with lower extensions 11 as bearing elements for the apparatus.

Figure 3 shows a burning apparatus 30 of circular plant. The total voids 31 in the walls are 50% of the total wall surface. The round bottom wall 32 bears four pivoting feet which keep the apparatus 1,5 cm away from the face, the latter being not shown. The side wall 34 is a single flexible belt of rectangular shape. Both walls are made by crossed stainless steel bands. The length of belt 34 equals the perimeter 35 of the bottom wall 32. In order to be applied to the latter wall, the belt wants simply to be hand bent and fastened at regular intervals to the adjacent borders 36, 37 by means of clips 38, respectively on the bottom and side walls, while the belt is kept closed into it self by clips 38 applied to the adjacent vertical borders. In this figure too the bottom grating is not shown to save confusion in the drawing. This embodiment is of particular convenience since putting back, moving, assembling and disassembling the apparatus require, respectively, little room and little while. It is realized that the bottom wall alternatively can have oval shape or any other shape whose periphery can fit a longitudinal lower border of a flexible or bendable rectangular side wall to form a metal burning apparatus according to the invention.

## Claims

1. Assembly of burning pellets and their burning apparatus built up to bum a pellet heap **characterized in that** each single pellet has a residual moisture content lower that 10% by weight and a closeness provided by a process pressure ranging from 20 to 30 bar and the burning apparatus (1, 30) is in the form of a metal container which is open on top and has the bottom wall (3, 3A,32) and the side walls (2, 2A, 3A) in grating structure where the overall surface of the voids (6, 6A,31) in each wall is between 25 and 50% of the overall surface of that wall, the apparatus being provided with bearing elements (5, 11, 33) which keep it at a distance from the face varying from 1,0 to 1,5 cm.

2. Assembly according to claim 1 **characterized in that** the burning apparatus (1, 30) is composed by more parts (2A, 3A, 2B) assembled together and disassemblable.

3. Assembly according to claim 1 **characterized in that** the burning apparatus (30) is composed by two parts only: a bottom wall (32) and a side wall (34).

4. Assembly according to claim 3 **characterized in that** the two parts that form the burning apparatus (30) are one circular or oval bottom wall (32) and one rectangular flexible side wall (34).
